# EUROPEAN PATENT SPECIFICATION

(11) **EP 3 719 573 B1**
(45) Date of publication and mention of the grant of the patent: **15.12.2021**
(21) Application number: 20167625.1
(22) Date of filing: 01.04.2020
(51) Int. Cl.: G03B 21/20

(54) **LIGHT SOURCE DEVICE AND PROJECTION APPARATUS**
LICHTQUELLENVORRICHTUNG UND PROJEKTIONSVORRICHTUNG
DISPOSITIF DE SOURCE DE LUMIÈRE ET APPAREIL DE PROJECTION

(30) Priority: 02.04.2019 JP 2019070827
(43) Date of publication of application: 07.10.2020
(73) Proprietor: STANLEY ELECTRIC CO., LTD., Tokyo 153-8636 (JP)
(72) Inventor: MORI, Kyosuke, Tokyo 153-8636 (JP); YAMAMOTO, Hideaki, Tokyo 153-8636 (JP)
(74) Representative: Emde, Eric

(56) References cited:
- JP-A- 2012 181 312
- US-A1- 2012 300 178
- US-A1- 2015 316 839
- US-A1- 2016 077 417
- US-A1- 2016 147 136

## Description

### Technical Field

The present invention relates to a light source device and a projection apparatus.

### Background Art

Recently, a small projection type display device which performs color display has been developed. When a light source that emits R, G, and B primary color lights is used to perform color display, it is difficult to reduce the size of the entire projection apparatus and the cost is also high. Therefore, it has been proposed to use a light source device in which excitation light is irradiated to a fluorescent wheel having a fluorescent material layer formed on a rotating plate, and light including R, G, and B light components is emitted from the fluorescent wheel (for example, JP 2011-108502 A1).

JP 2011-108502 A1 describes a light source device using, as a fluorescent wheel provided with a plurality of fluorescent material layers, a fluorescent wheel in which a red fluorescent material layer, a green fluorescent material layer, and a blue fluorescent material layer are formed. The fluorescent material layers for emitting respective colors are provided as segments each serving as a fluorescent light emitting region arranged in the circumferential direction of a circular light emitting plate. The fluorescent material layers of the respective colors are separately formed on a metal substrate in predetermined regions by using a screen printing technique. A solid light source that emits ultraviolet light is used as an excitation light source that excites each fluorescent material layer.

US 2015/316839 A1 was used as a basis for the preamble of claim 1 and discloses a light source unit which includes a light source which emits a light bundle in one direction; a polarizing unit which is formed to selectively transmit a certain polarized light of a certain wavelength in the light bundle; and a reflection unit which is formed so as to delay the phase of the polarized light so that the polarized light is reflected by the polarizing unit, convert one part of the wavelength of the polarized light, and reflect the polarized light toward the polarizing unit.

From the viewpoint of heat dissipation, supporting property and cost, a metal substrate is often adopted as the substrate used in the fluorescent wheel. Therefore, the substrate and the fluorescent material layer are used in combination while there is a large difference in the thermal expansion coefficient between them. The fluorescent material layer generates heat by excitation light. Therefore, when the fluorescent wheel is continuously irradiated with the excitation light, the fluorescent material layer and the metal substrate are heated to expand.

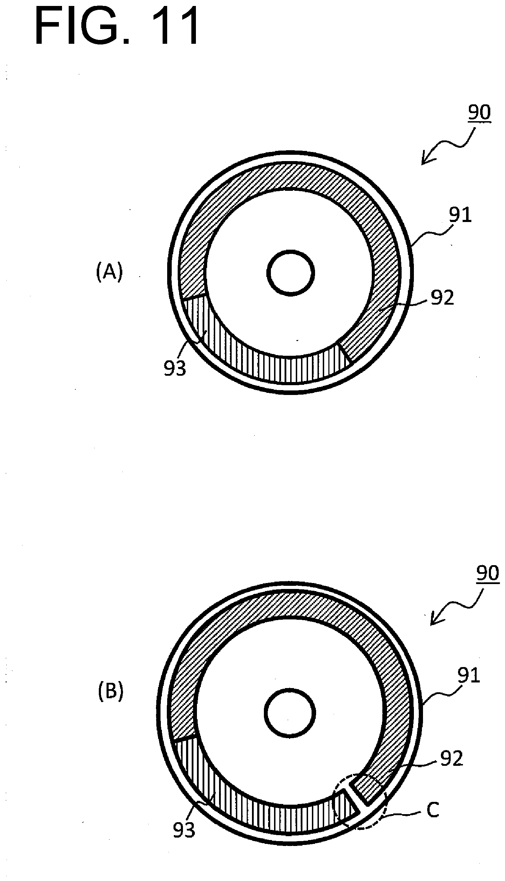

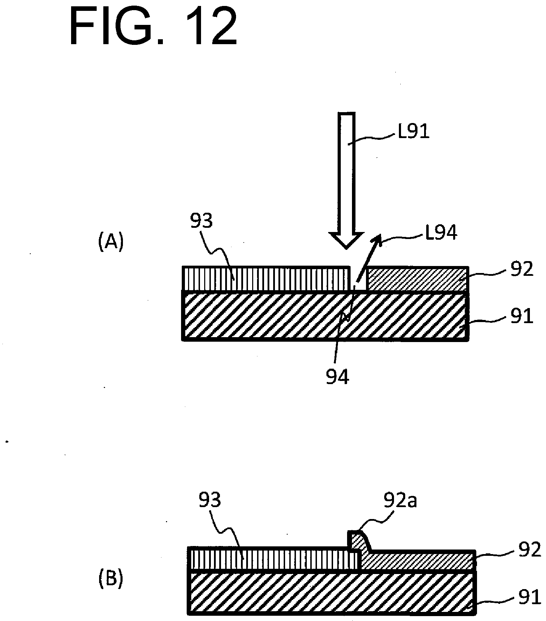

For example, FIG. 11(A) shows a fluorescent wheel 90 in which a yellow fluorescent material layer 92 and a red fluorescent material layer 93 are separately coated on a metal substrate 91 in two respective regions along the circumferential direction thereof. In the fluorescent wheel 90, a gap 94 is generated in a boundary region C between the fluorescent material layers, as illustrated in FIG. 11(B), due to thermal expansion and contraction of the metal substrate 91. Since the underlying metal substrate 91 is exposed in the gap 94 as illustrated in FIG. 12(A), incident light L91 is reflected thereon to generate reflected light L94. That is, there arises a problem that a light component other than the fluorescence from the respective fluorescent material layers 92 and 93 is generated.

In order to solve this problem, it is considered to form one fluorescent material layer (the yellow fluorescent material layer 92 in this conventional example) partly superimposing on the other fluorescent material layer (the red fluorescent material layer 93 in this conventional example) in the boundary region C at its superimposing section 92a as illustrated in FIG. 12(B). However, it is difficult to control the amount of superimposition of the superimposing section 92a of the one fluorescent material layer 92. This means that it is also difficult to control the balance of the primary lights R, G and B contained in the light emitted from the light source device. This may increase the variation of product quality of the fluorescent wheel, and decrease the product yield.

### Summary

The present invention was devised in view of these and other problems and features in association with the conventional art. It is an object of the present invention to provide a light source device in which a gap is not generated between segments of a fluorescent wheel and a product yield is increased with a simple configuration.

In another aspect, the present invention is intended to provide a projection type display apparatus in which higher illuminance can be obtained.

In order to achieve the aforementioned object, a light source device according to a first aspect of the present invention is provided as set forth in claim 1. Preferred embodiments of the light source device may be gathered from the dependent claims.

Furthermore, in order to achieve the aforementioned object, a projection apparatus according to a second aspect of the present invention is provided as set forth in claim 7.

According to first aspect of the invention, the second segment forming layer has a laminated structure in the second segment region of the fluorescent wheel, and one layer (upper or lower layer) of the laminated structure of the second segment forming layer is formed of the same layer as the first segment forming layer used in the first segment region continuously from the first segment region. Therefore, even when the fluorescent wheel is thermally expanded and contracted, a gap is not generated in the boundary region between the first segment region and the second segment region. Further, since the second segment forming layer is formed in a laminated structure, highly accurate positioning just as painting as illustrated in FIGS. 11(A) and (B) is not required. Therefore, it is possible to produce the light source device with a simple configuration, while increasing the production yield.

Further, according to the second aspect of the present invention, since there is no gap generated in the boundary region between the first segment region and the second segment region of the fluorescent wheel, even when a laser light source is adopted as an excitation light source, a problem in that the irradiated light from the laser light source is reflected as it is by a metal substrate can be prevented. Therefore, as compared with the case of using a light source device in which a gap as illustrated in FIGS. 11(A) and (B) is likely to be generated, the light source device of the present invention can adopt a stronger light as the excitation light. Therefore, it is possible to provide an advantageous effect of capable of providing a projection type display device with higher illuminance.

### Brief Description of Drawings

These and other characteristics, features, and advantages of the present invention will become clear from the following description with reference to the accompanying drawings, wherein:
FIG. 1 is a diagram illustrating an example of a configuration of a projector (projection apparatus) according to an embodiment of the present invention;
FIG. 2 is an exploded perspective view of a light source device used in the projector of FIG. 1;
FIG. 3(A) is a plan view illustrating an example of a fluorescent wheel used in the light source device of FIG. 2 according to the first embodiment, and FIG. 3(B) is a cross-sectional view of the fluorescent wheel taken along line A-A;
FIGS. 4(A) and 4(B) are each a cross-sectional view in a radial direction in a first region of a fluorescent wheel used in a light source device according to a third embodiment not part of the present invention;
FIGS. 5(A) is a plan view illustrating an example of a fluorescent wheel used in a light source device according to a fourth embodiment not part of the present invention, and FIG. 5(B) is a cross-sectional view taken along line B-B;
FIG. 6 is a plan view of a fluorescent wheel used in a light source device according to a fifth embodiment of the present invention;
FIG. 7 is a plan view of a fluorescent wheel used in a light source device according to a sixth embodiment of the present invention;
FIG. 8 is a plan view of a fluorescent wheel used in a light source device according to a seventh embodiment not part of the present invention:
FIG 9 is a diagram illustrating a projection apparatus 50 according to a ninth embodiment;
FIG. 10 is an exploded perspective view of the light source device used in FIG. 9;
FIGS. 11(A) and 11(B) are each a diagram illustrating an example of a conventional fluorescent wheel for explaining the problem of the present invention; and
FIGS. 12(A) and 12(B) are each a cross-sectional view illustrating a main part of a cross section of the fluorescent wheel of FIG. 11 along the circumferential direction thereof.

### Description of Exemplary Embodiments

A description will now be made below to light source devices and projection apparatuses of the present invention with reference to the accompanying drawings in accordance with exemplary embodiments.

### Projection Apparatus:

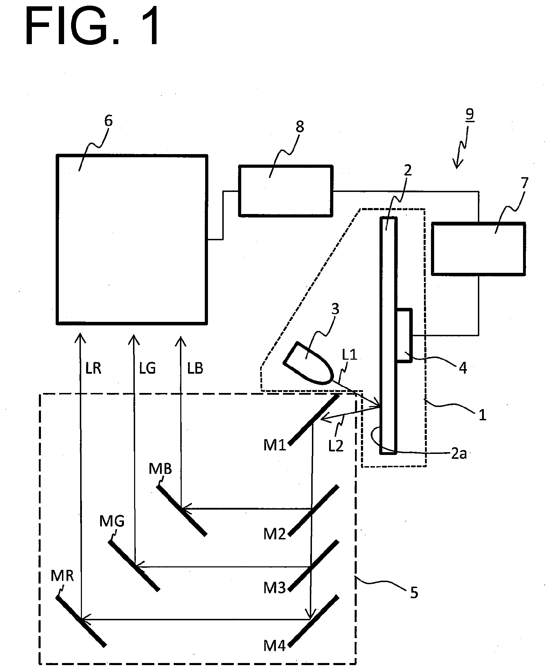

First, a description will be given of a projection apparatus using a light source device according to the present invention. FIG. 1 shows a projector as an image projection apparatus for projecting a screen image of a personal computer, a video image, or the like onto a screen. The projector 9 includes a light source device 1, a color component separating unit 5, and a projection optical system 6. Further, the projector 9 includes a light source device controlling unit 7 configured to control the light source device 1 as a functional block, and a projection apparatus controlling unit 8 configured to control the projection optical system 6 to create a predetermined projection image using lights from the color component separating unit 5.

The light source device 1 is required to have a light source capable of emitting light of high brightness. The light source device 1 in the present embodiment includes a fluorescent wheel 2 as a light emitting plate, a semiconductor light source 3 configured to emit excitation light to irradiate a fluorescent material layer formed on the fluorescent wheel 2 with, and a motor 4 configured to rotate the fluorescent wheel 2. Increase in the light quantity of the excitation light to be irradiated to the fluorescent material layer can increase the illuminance of the light in the fluorescent material layer. The drawings show an example using one semiconductor light source 3, but it is not limitative, and if a plurality of semiconductor light sources is used, it is possible to obtain a higher illuminance.

The irradiation light L1 to be irradiated from the semiconductor light source 3 to the fluorescent wheel 2 may preferably be a spot light that is irradiated to a predetermined irradiation area by converging light by a condenser lens (not illustrated) or by collimating light using a collimator lens. The light source device 1, when using a plurality of semiconductor light sources, emits light to be incident on the same condenser lens or collimator lens. Alternatively, an optical fiber may be used for this purpose.

Fluorescence is emitted from the fluorescent material layer of the fluorescent wheel 2 irradiated with the excitation light. Details of the fluorescent wheel 2 will be described later. In the fluorescent wheel 2, a fluorescent material layer is formed on a support substrate 10 made of a metal material, and the fluorescence is included in the reflected light L2 from the fluorescent wheel 2. The reflected light L2 is guided to the color component separating unit 5. A condenser lens (not illustrated) is provided between the reflected light L2 and the color component separating unit 5.

The fluorescent material layer provided on the fluorescent wheel 2 includes a plurality of fluorescent materials that are excited by the excitation light from the semiconductor light source 3 and emit lights with different wavelength ranges. The reflected light from the fluorescent wheel 2 becomes reflected light L2 of a composite color in the wavelength ranges of the three primary colors of R, G and B.

The color component separating unit 5 is an optical system capable of separating the light of the reflected light L2 into three primary colors of R, G, and B, and outputs the light of each primary color wavelength range to the projection optical system 6. The reflected light L2 is first reflected by a total reflection mirror M1 and then directed to mirrors M2, M3 and M4. The mirrors M2 and M3 are each a dichroic mirror that reflects light with specific wavelengths and transmits light with other wavelengths. The mirror M2 reflects the light component in the blue wavelength range, the mirror M3 reflects the light component in the green wavelength range, and each mirror transmits light with other wavelengths. Therefore, after the light components in the blue wavelength range and in the green wavelength range are removed, the light component in the red wavelength region reaches the mirror M4 and is reflected by the same. Light of the blue component reflected by the mirror M2 emits light LB reflected by the mirror MB. Light of the green component reflected by the mirror M3 is reflected by the mirror MG to be outputted as light LG. Light of the red component reflected by the mirror M4 is reflected by the mirror MR to be outputted as light LR. The lights LR, LG and LB are lights separated into three primary colors of R, G and B, and the mirrors MR, MG and MB are each a mirror configured to adjust the traveling direction used to direct the traveling direction of the lights LR, LG and LB to the projection apparatus 6.

The projection optical system 6 includes at least an optical spatial modulator (not illustrated) and a projection lens configured to project light having been modulated by the optical spatial modulator toward a front screen. The optical spatial modulator is, for example, an MD device (micromirror device) including a plurality of micromirrors. The optical spatial modulator includes three MD devices corresponding to respective lights LR, LG and LB, and each MD device is controlled by an output signal from the projection apparatus controlling unit 8 to control each micromirror angle to a predetermined mirror angle. Each of the lights LR, LG and LB having entered the projection optical system 6 is reflected by the controlled respective micromirrors at a predetermined angle, resulting in being capable of projecting a desired image or the like. The projection lens is a lens configured to magnify and project the light modulated by the light spatial modulator toward the front screen, and may be composed of a single lens or a plurality of lenses.

### First embodiment:

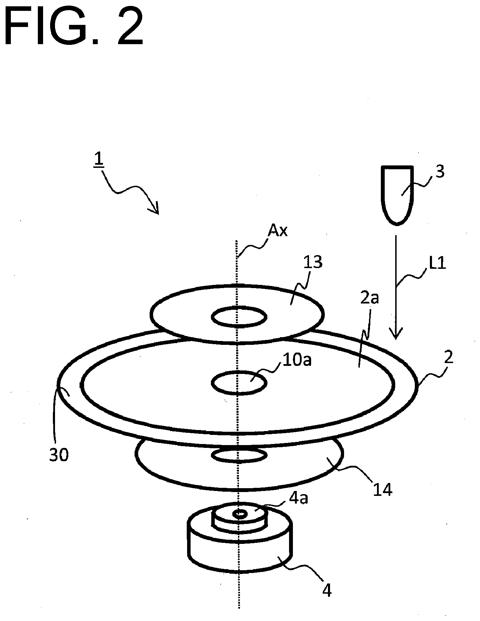

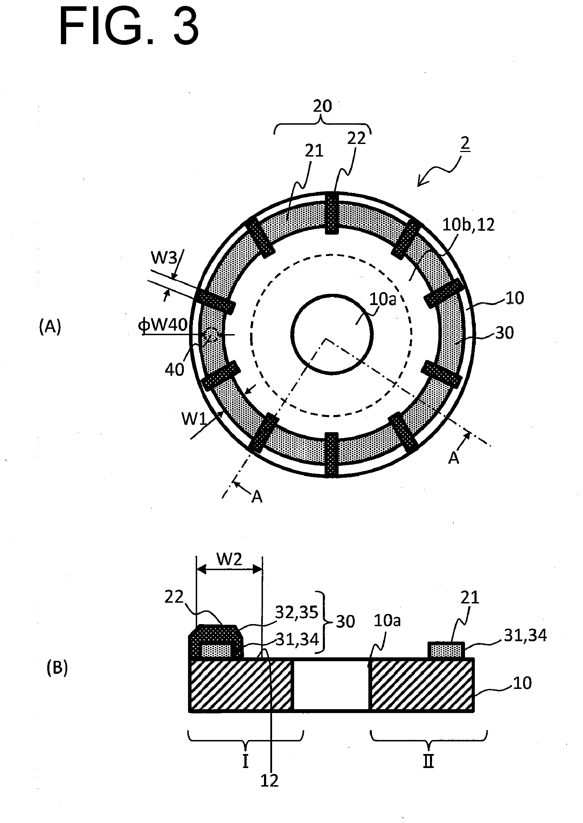

A description will next be given of a plurality of embodiments for the light source device 1. A light source device according to a first embodiment will be described first with reference to FIGS. 2 and 3(A) and 3(B).

### Light source device:

A light source device 1 will be described first. FIG. 2 is an exploded perspective view illustrating the light source device, and FIGS. 3(A) and 3(B) are diagrams illustrating an example of a fluorescent wheel used in the light source device of FIG. 2. The light source device 1 includes the rotatable fluorescent wheel 2 around a rotation axis Ax, a motor 4 configured to rotate the fluorescent wheel 2 located above the rotation axis Ax, and the semiconductor light source 3. The semiconductor light source 3 emits light reaching the incident surface 2a of the fluorescent wheel 2. The motor 4 and the semiconductor light source 3 receive the output signal from the light source device controlling unit 7 so that the rotation drive of the motor 4 and the lighting state of the semiconductor light source 3 are controlled. The incident light L1 arriving at the incident surface 2a of the fluorescent wheel 2 irradiates an irradiation region 40 having a predetermined diameter as spot light.

### Fluorescent wheel:

In the example illustrated in FIG. 2 and FIGS. 3(A) and 3(B), the fluorescent wheel 2 includes a fluorescent material layer on the incident surface 2a of the support substrate 10 made of a metallic disk. The fluorescent material layer includes a first fluorescent material layer 34 provided in an annular shape in an outer peripheral region 10b of the incident surface 2a, and a second fluorescent material layer 35 provided at a plurality of locations so as to partially radially cover the first fluorescent material layer 34.

The support substrate 10 is provided with a reflective surface on the incident surface 2a side, and is formed of a metal material having a thickness capable of holding the fluorescent material layer without deformation during rotation. Preferable examples of the metal material may include metal materials having a thermal conductivity greater than 150 (W/m·K) such as aluminum, molybdenum, copper, a Cu-W based alloy and a Cu-Mo based alloy from the viewpoint of heat dissipation property. A material having a thermal conductivity of about 100 (W/m·K) such as brass, iron or stainless steel may also be used according to purposes. This is because the material having a thermal conductivity of about 100 (W/m·K) has a higher thermal conductivity than glass of which thermal conductivity is 1 (W/m·K). The size of the support substrate 2 is, for example, about 2 cm in radius and 0.5 mm in thickness.

A shaft mounting hole 10a is formed at the central portion where the rotation axis Ax intersects the support substrate 10. The shaft mounting hole 10a is a hole with an inner diameter whose size is set so that the rotary portion 4a of the motor 4 fits thereto. A lower receiving plate 14, the support substrate 10 and an upper receiving plate 13 are fit and fixed in order to the rotating portion 4a of the motor 4. In a state where the support substrate 10 is sandwiched between the lower receiving plate 14 and the upper receiving plate 13, the lower receiving plate 14 and the upper receiving plate 13 are coupled with the rotating portion 4a of the motor 4 for fixing. On the upper receiving plate 13, an adhesive serving as a balancer (weight) which also functions as a rotary balance adjustment receiving member and adjusts the rotation balance of the fluorescent wheel 2 so as not to cause a deviation is provided, as necessary. The lower receiving plate 14 and the upper receiving plate 13 are each made of a metal material and have a diameter smaller than that of the support substrate 10. The lower receiving plate 14 may be omitted when the fluorescent wheel 2 can be fixed in a predetermined position without deviation. Further, the motor 4 is located on the side opposite to the incident surface 2a of the fluorescent wheel 2.

In the outer peripheral region 10b of the incident surface 2a of the support substrate 10, i.e., the outer peripheral region outer than the position at 1/2 the radius in the range from the center about the rotation axis Ax to the peripheral side surface of the support substrate, the fluorescent material layer is provided. The region corresponding to the position where the fluorescent material layer is provided on the surface of the support substrate 10 is a smooth flat surface 12. The flat surface 12 that is a polished surface to increase the reflectivity is provided on the outer peripheral region 10b.

The first fluorescent material layer 34 is formed by printing and solidifying a coating agent in which fluorescent material particles that emit fluorescence in the red and green wavelength regions when being excited by light from the semiconductor light source 3 are dispersed in a silicone resin binder, so as to have a constant thickness. The first fluorescent material layer 34 may be formed with a material obtained by mixing and dispersing fluorescent material particles emitting fluorescence in the red wavelength region and fluorescent material particles emitting fluorescence in the green wavelength region. The second fluorescent material layer 35 is formed with a material in which fluorescent material particles formed of a second fluorescent material that emits fluorescence in the blue wavelength region when being excited by light from the semiconductor light source 3 are dispersed in a silicone resin binder. In the example illustrated in FIGS. 3(A) and 3(B), the second fluorescent material layers 35 are arranged at 10 positions at equal intervals so as to straddle the first fluorescent material layer 34 in the radial direction. The second fluorescent material layer 35 may be formed, for example, by coating the material using a dispenser.

In the present embodiment, unless otherwise specified, the fluorescent material included in the first fluorescent material layer 34 is defined as a first fluorescent material without distinguishing between the case where one type of fluorescent material is dispersed in the resin binder and the case where two or more types of fluorescent material are mixed and dispersed in the resin binder. Similarly, the fluorescent material included in the second fluorescent material layer 35 is defined as the second fluorescent material regardless of the type of the fluorescent material.

The region where the first fluorescent material layer 34 and the second fluorescent material layer 35 are provided is composed of a plurality of segment regions 20 in plan view. A segment forming layer 30 including at least the first fluorescent material layer 34 is formed in the plurality of segment regions 20. A first segment region 21 is a region in which the first fluorescent material layer 34 is formed on the support substrate 10 as illustrated in the right region II in the cross-sectional view of FIG. 3(B). A second segment region 22 is a region in which the first fluorescent material layer 34 and the second fluorescent material layer 35 are formed on the support substrate 10 as illustrated in the left region I in the cross-sectional view of FIG. 3(B). Specifically, the second segment region 22 is formed in plural numbers around the rotation axis Ax and at equal intervals in the circumferential direction around the rotation axis Ax. In the present invention, the first fluorescent material layer 34 is continuously formed both in the first segment region 21 and the second segment region 22 at the boundary dividing the first segment region 21 and the second segment region 22. In other words, there is no region where none of the fluorescent material layers is present at the boundary between the two. That is, the first segment region 21 and the second segment region 22 are formed adjacent to each other without any gap.

When the fluorescent wheel 2 rotates by a predetermined angle around the rotation axis Ax, the first segment region 21 and the second segment region 22 are located on the circumference. When light from the semiconductor light source 3 is irradiated to a predetermined region on the circumference, light emitted from the first segment region 21 and light emitted from the second segment region 22 are reflected (observed) alternately. By rotating the fluorescent wheel 2 at high speed, reflected light L2 of a combined color of light emitted from the first segment region 21 and light emitted from the second segment region 22 is obtained. The hue of the reflected light L2 can be adjusted according to the area ratio of the first segment region 21 and the second segment region 22, the type and concentration of the fluorescent materials used for the first fluorescent material layer 34 and the second fluorescent material layer 35, and the like.

Here, the first fluorescent material layer 34 is a ring-shaped layer having a uniform thickness. The width W1 thereof in the radial direction is larger than the spot diameter φ W40 of the irradiation region 40 by the incident light L1. Herein, the width W1 is 1.5 to 2 times the size of the irradiated region of the incident light L1 on the first fluorescent material layer 34. Specifically, as an example, the spot diameter φ W40 is set to 2 mm to 3 mm, and the width W1 in the radial direction of the first fluorescent material layer 34 is set to 4 mm. The thickness is 150 µm. The width W1 of the first fluorescent material layer 34 in the radial direction is smaller than the width W2 of the flat surface 12 (outer peripheral region 10b). The fluorescence emitted from the first fluorescent material layer 34 is emitted as diffused light. Widening of the flat surface 12 more than the first fluorescent material layer 34 can cause, for example, light toward the support substrate 10 in a position closer to the rotation axis Ax to be reflected by the flat surface 12 and directed to the converging lens (not illustrated).

The first fluorescent material layer 34 located in the first segment region 21 corresponds to the first segment forming layer 31 in the present invention.

The second fluorescent material layer 35 has a width in the radial direction larger than that of the first fluorescent material layer 34 so as to cover and straddle the first fluorescent material layer 34. Here, a portion(s) thereof is in contact with the flat surface 12, and a portion(s) is formed by stacking directly on the first fluorescent material layer 35. The width W3 of the second fluorescent material layer 35 in the circumferential direction is smaller than the size φ W40 of the irradiation region of the incident light L1. Specifically, the second segment region 22 is radially formed around the rotation axis Ax, and the second segment region 22 has a length (W3) in the circumferential direction around the rotation axis Ax is smaller than the length W40 of the irradiation region 40 of light emitted from the semiconductor light source 3 and irradiated on the incident surface 2a of the fluorescent wheel 2 in the circumferential direction around the rotation axis Ax. As illustrated in FIG. 3(B), the lower layer closer to the support substrate 10 is the first fluorescent material layer 34, and the upper layer is the second fluorescent material layer 35.

The thickness of the second fluorescent material layer 35 is the same as or thinner than the thickness of the first fluorescent material layer 34. When the thickness of the second fluorescent material layer 35 is equal to or less than that of the first fluorescent material layer 34, excitation light not being absorbed by the second fluorescent material layer 35 and reaching the first fluorescent material layer 34 is also likely to be generated. Also, in the second segment region 22, if there is excitation light reaching the first fluorescent material layer 34, not only the fluorescence from the second fluorescent material layer 35 but also the fluorescence from the first fluorescent material layer 34 can be utilized, whereby the utilization efficiency of the excitation light is improved. Specifically, as an example, the second fluorescent material layer 35 is formed such that the width of the second fluorescent material layer 35 in the radial direction is 6 mm, the width in the circumferential direction is 1 mm, and a thickness is 100 µm.

A structure in which the second fluorescent material layer 35 is laminated on the first fluorescent material layer 34 located in the second segment region 22 corresponds to the second segment forming layer 32 in the present invention.

In the present embodiment, the second fluorescent material layers 35 are partly stacked at equal intervals on the first fluorescent material layer 34 formed in an annular shape. That is, the segment forming layer 30, in which the first segment forming layer 31 and the second segment forming layer 32 are alternately provided, alternately has a region composed of only the first fluorescent material layer 34 and a region in which the first fluorescent material layer 34 and the second fluorescent material layer 35 are stacked. With such a configuration, the first fluorescent material layer 34 can always be formed at all the boundary portions between the segments. Therefore, even in the case of thermal expansion and contraction, a gap is not generated at the boundary. Further, since the gap is not generated, it is possible to use a semiconductor laser light source with an energy higher than a light emitting diode as the semiconductor light source 3. As a result, a high illuminance can be obtained.

As the first fluorescent material contained in the first fluorescent material layer 34, for example, the following fluorescent material can be used. The present invention is not limited to these fluorescent materials, and any one or plural types of various fluorescent materials which emit fluorescence including lights in the wavelength ranges of three primary colors of R, G and B when excited by excitation light in a mixed manner can be used.

Examples of the fluorescent materials that emit yellow fluorescence may include Y₃Al₅O₁₂:Ce³⁺(YAG), (Sr,Ba)₂SiO₄:Eu2⁺ and Cax(Si,Al)₁₂(O,N)₁₆:Eu²⁺. Examples of the fluorescent materials that emit yellow-green fluorescence may include Lu₃Al₅O₁₂:Ce. Examples of the fluorescent materials that emit green fluorescence may include Y₃(Ga,Al)₅O₁₂:Ce³⁺, Ca₃Sc₂Si₃O₁₂:Ce³⁺, CaSc₂O₄:Eu²⁺, (Ba,Sr)₂SiO₄:Eu2⁺, Ba₃Si₆O₁₂N₂:EU²⁺ and (Si,Al)₆(O,N):Eu2+. Examples of the fluorescent materials that emit red fluorescence may include (Sr,Ca)AlSiN₃:Eu, CaAlSiN₃:Eu, SrAlSiN₃:Eu, (Ba,Sr,Ca)₂Si₅N₈:Eu, (Sr,Ca)S:Eu, Ca-*α* sialon, 0.5MgF₂/3.5MgO·GeO₂:Mn, SrLiAl₃N₄:Eu, K₂SiF₆:Mn, CaAlSiN₃:Eu²⁺, Ca₂Si₅N₈:Eu²⁺, La₂O₂S:Eu³⁺, KSiF₆:Mn⁴⁺ and KTiF₆:Mn⁴⁺.

As the second fluorescent material included in the second fluorescent material layer 35, any one or plural types of various fluorescent materials may be used similarly to the first fluorescent material. However, in the present invention, the second fluorescent material has a fluorescence spectrum distribution different from that of the first fluorescent material.

As the resin binder contained in the first fluorescent material layer 34 and the second fluorescent material layer 35, a resin material having a high transmittance of excitation light and light in the wavelength range of fluorescence, such as an acrylic resin, can be used in addition to a silicone resin.

For example, the second segment forming layer 32 uses YAG:Ce as a fluorescent material contained in the first fluorescent material layer 34 located on the lower side, and uses a SCASN fluorescent material (a fluorescent material having (Sr,Ca)AlSiN:Eu or the like as a basic composition) as a fluorescent material contained in the second fluorescent material layer 35 located on the upper side. At this time, a SCASN fluorescent material contained in the second fluorescent material layer 35 is excited by blue laser light using a blue laser light source as the semiconductor light source 3. In this case, the SCASN fluorescent material emits fluoresce in the red wavelength range. Part of the blue laser light passes through the second fluorescent material layer 35 and reaches YAG:Ce as a fluorescent material contained in the first fluorescent material layer 34. The YAG:Ce fluorescent material emits yellow fluorescence and has a fluorescence spectrum with a peak between the red and green wavelength regions. The SCASN fluorescent material can be excited not only by light in the blue wavelength region but also by light in the blue-green wavelength region. Therefore, excitation can also be achieved by fluorescence emitted from YAG:Ce. As described above, selection of a material having an excitation spectrum of light as a result of excitation by the fluorescence from the first fluorescent material layer 34 located on the lower side as the material of the second fluorescent material layer 35 located on the upper side can enhance the color conversion efficiency.

If the emission quantum yield when light in the blue wavelength region is used as excitation light and the emission quantum yield when light in the wavelength region of the fluorescence spectrum emitted from YAG:Ce is used as excitation light are compared when the SCASN fluorescent material is excited, the emission quantum yield when YAG:Ce is used is higher than the other. Thus, like the SCASN fluorescent material which is used as a fluorescent material layer located on the upper side, when the material having the higher emission quantum yield due to the emission wavelength from the fluorescent material contained in the lower layer than the emission quantum efficiency in the emission wavelength of the semiconductor light source 3 is used, the upper layer can be excited by the semiconductor light source 3 from the surface side while it can be excited by fluorescence from the fluorescent material contained in the lower layer from the lower side (the interface side between the lower layer). Therefore, it is possible to increase the conversion efficiency more in the upper layer.

### Second embodiment:

In the first embodiment described above, the second fluorescent material layer 35 in which the second fluorescent material is mixed is formed on the first fluorescent material layer 34 as the second fluorescent material layer formed on the fluorescent wheel 2. The second embodiment is different from the first embodiment in that a diffusion layer containing no fluorescent material is used. Since the other features are the same as those of the above-described embodiment, the description thereof will be omitted. The second embodiment will be described with reference to FIGS. 3(A) and 3(B) which have been used in the description of the first embodiment, and it should be noted that the reference numeral 35 is assigned to a diffusion layer instead of the second fluorescent material layer.

As illustrated in FIGS. 3(A) and 3(B), the second segment region 22 includes the first fluorescent material layer 34 and a second segment forming layer 32 including a diffusion layer 35 covering the first fluorescent material layer 34. The first fluorescent material layer 34 is a layer having a uniform thickness in an annular shape. The diffusion layer 35 is formed so as to cover and straddle the first fluorescent material layer 34. Specifically, after the first fluorescent material layer 34 is applied and dried, the diffusion layer 35 is formed by application.

The diffusion layer 35 is formed of a material in which a diffusion material made of fine particles of white inorganic ceramics is dispersed as a diffusion material in a resin binder such as a silicone resin. As the inorganic ceramics, titanium oxide, barium oxide, calcium carbonate, or the like may be used. As the diffusion material, a material in which particles having a refractive index different from that of the resin binder are dispersed may also be used. Examples thereof may include a material obtained by dispersing a silicone resin in a transparent resin binder such as a polycarbonate resin, a polystyrene resin, or an acrylic resin. However, when a light source configured to emit light in ultraviolet to blue wavelength range is used as the semiconductor light source 3, due to the strong energy of light, degradation of the resin material is likely to occur as compared with the case of using light in the red wavelength range. Therefore, it is preferable to use inorganic ceramics as the diffusion material.

The diffusion layer 35, which is formed on the reflective support substrate 10, diffuses and reflects the incident light. Therefore, the semiconductor light source 3 used in the projection apparatus 9 uses a semiconductor light source that emits visible light. In the second segment region 22, visible light enters as incident light L1. Apart of the incident light L1 is reflected by the diffusion layer 35, and another part of the incident light L1 is transmitted to reach the first fluorescent material layer 34, and the first fluorescent material layer 34 emits fluorescence in the same manner as the first segment region 31. In the reflected light from the diffusion layer 35 includes a light component with a visible light wavelength range emitted from the semiconductor light source. Therefore, the color component separating unit 5 of the projection apparatus 9 can separate the light into the three primary colors of R, G and B.

### Third embodiment:

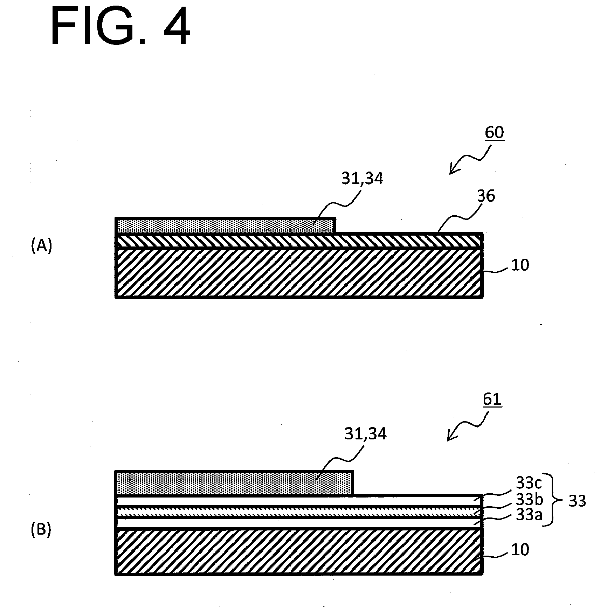

A third embodiment, not part of the invention, will be described with reference to FIGS. 4(A) and 4(B). FIGS. 4(A) and 4(B) are each a cross-sectional view in a radius direction in the first region of a fluorescent wheel 60. The fluorescent wheel 2 in the first embodiment uses a metal material as the support substrate 10, and the flat surface 12 formed by a polished surface in order to increase the reflectivity was formed in the outer peripheral region 10b. In this embodiment, it differs from the first embodiment in that a reflective coating layer is provided on the entire surface on the support substrate 10 on the side of the incident surface 2a, and a segment forming layer 30 is provided through the reflective coating layer. Incidentally, the dimensions in the thickness direction in FIGS. 4(A) and 4(B) is illustrated exaggerating a part of the thickness for convenience of explanation.

In the fluorescent wheel 60 of FIG. 4(A), a white reflective layer in which white inorganic ceramic fine particles are dispersed at a high concentration in a silicone resin is used as a reflective coating layer 33. The white reflective layer may be formed by a printing technique. The reflective coating layer 33 is formed between the support substrate 10 and the first fluorescent material layer 34. In the fluorescent wheel 61 of FIG. 4(B), the reflective coating layer 33 is a thin reflective film having a three-layer structure, and is formed by a vacuum thin film forming technique such as vacuum evaporation or sputtering. For example, the reflective coating layer 33 is a laminated film in which a silicon oxide layer 33a as a base layer, a silver layer 33b as a metal reflective layer, and a titanium oxide layer 33c as a reflection enhancing film are sequentially formed on the support substrate 10 in order. The reflective coating layer 33 is formed between the support substrate (aluminum substrate) 10 and the first fluorescent material layer 34.

### Fourth embodiment:

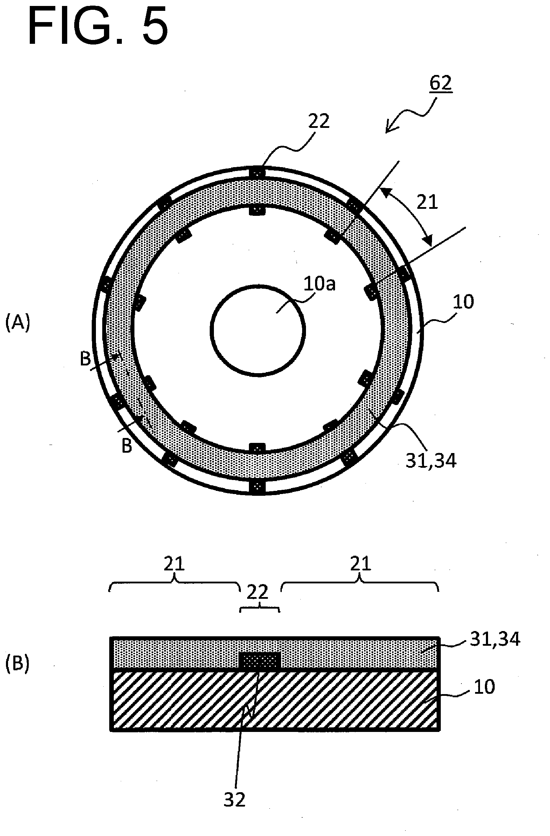

A fourth embodiment, not part of the invention, will be described with reference to FIGS. 5(A) and 5(B). In the first embodiment, the second fluorescent material layer 35 in which the second fluorescent material is mixed is formed on the first fluorescent material layer 34 as the second fluorescent material layer formed on the fluorescent wheel 2, but in the fourth embodiment, the second fluorescent material layer 35 is formed below the first fluorescent material layer 34. FIGS. 5(A) and 5(B) are each a diagram for explaining a fluorescent wheel 62 of the fourth embodiment, and FIG. 5(A) is a plan view of the fluorescent wheel 62, and FIG. 5(B) is a cross-sectional view taken along line B-B in FIG. 5(A).

In the first embodiment, after the first fluorescent material layer 34 is formed on the support substrate 10, the second fluorescent material layer 35 is formed by coating. Specifically, in the fourth embodiment, the second fluorescent material layer 35 is first formed on the support substrate 10. The second fluorescent material layer 35 is applied by using a dispenser (not illustrated) so as to have the same position and dimensions as those of the first embodiment. Next, the first fluorescent material layer 34 having an annular shape is formed in the outer peripheral region 10b of the support substrate 10 so as to partially cover the second fluorescent material layer 35. For example, coating and forming are performed using a known screen printing technique in which printing is performed using a screen plate provided with an annular printing portion. In screen printing, since the material of the first fluorescent material layer is printed while being scraped off by a squeegee, as illustrated in the cross-sectional view of FIG. 5(B), the thickness of the first fluorescent material layer 34 in the region where the second fluorescent material layer 35 is located, that is, in the second segment region 22, can be formed to be thinner than the thickness of the first fluorescent material layer 34 in the region where the second fluorescent material layer 35 is not formed, that is, in the first segment region 21.

Also, in the fourth embodiment, the first fluorescent material layer 34 is always formed at the boundary between the segments. Since the first fluorescent material layer 34 is formed in an annular shape without any discontinuity, it is possible to prevent a gap from being generated at the boundary between the first segment region 21 and the second segment region 22 due to thermal expansion and contraction.

In the present embodiment, a diffusion layer (35) containing no fluorescent material may be used in place of the second fluorescent material layer (35) as in the second embodiment, or a reflection coating layer may be provided on the entire surface of the support substrate 10 as in the third embodiment.

### Fifth embodiment:

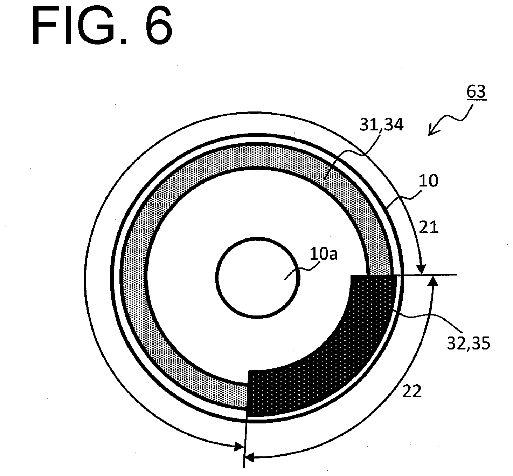

A fifth embodiment will be described with reference to FIG. 6. FIG. 6 is a plan view of a fluorescent wheel 63 according to the fifth embodiment. In the first embodiment, the first segment regions 21 and the second segment regions 22 are alternately provided in plural locations in the circumferential direction. The fifth embodiment is different from the first embodiment in that the second segment region 22 is provided as a region of about 1/4 the circumference, and the first segment region 21 is a region of 3/4 the circumference or the remaining region. The second segment region of the present embodiment also has a structure in which the first fluorescent material layer 34 is laminated as a lower layer closer to the support substrate 10 and the second fluorescent material layer 35 is laminated as an upper layer in the same manner as in the first embodiment. The other features are the same as those of the first embodiment.

### Sixth embodiment:

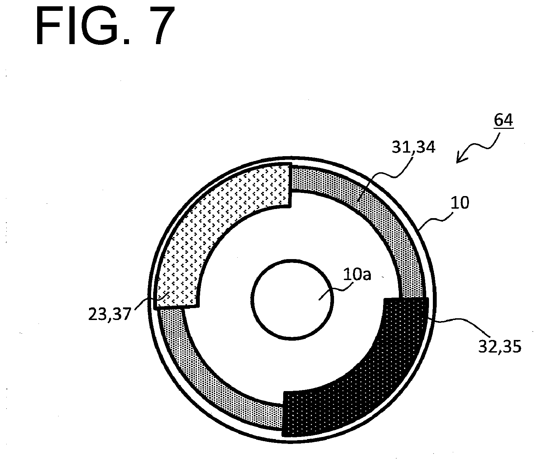

A sixth embodiment will be described with reference to FIG. 7. FIG. 7 is a plan view of a fluorescent wheel 64 according to the sixth embodiment. In the fifth embodiment, two segment regions including the first segment region 21 and the second segment region 22 are provided. The present embodiment is different from the fifth embodiment in that a third segment region 23 is further provided. The other points are the same as those of the fifth embodiment.

Specifically, the fluorescent wheel 64 further includes the third segment region 23 provided in the circumferential direction around the rotation axis Ax. In the third segment region 23, a third fluorescent material layer 37 is formed by applying a material in which a fluorescent material emitting fluorescence with a fluorescence spectrum different from those of the first fluorescent material and the second fluorescent material is dispersed in a resin binder, on the first fluorescent material layer 34 in a similar manner to that for the second fluorescent material layer 35 of the second segment region 22.

### Seventh embodiment:

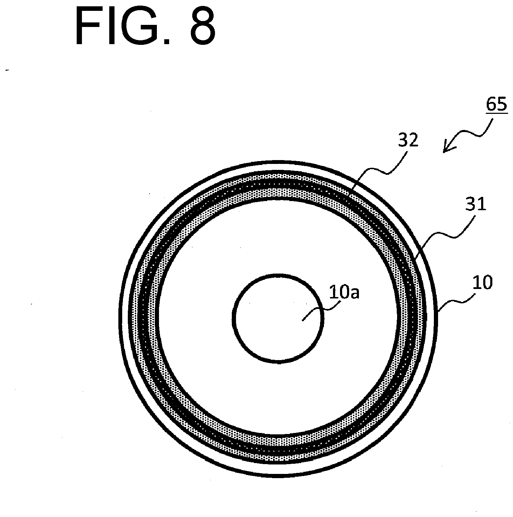

A seventh embodiment , not part of the invention, will be described with reference to FIG. 8. FIG. 8 is a plan view of a fluorescent wheel 65 according to the seventh embodiment. In the first embodiment, the first segment regions 21 and the second segment regions 22 are alternately provided in plural locations in the circumferential direction. In the seventh embodiment, the first segment region in which the first fluorescent material layer 34 is provided and the second segment region with a laminated structure in which the lower layer is formed of the first fluorescent material layer 34 and the upper layer is formed of the second fluorescent material layer 35 are sequentially positioned along the radial direction as illustrated in FIG. 8.

The first fluorescent material layer 34 is a layer in an annular shape having a uniform thickness as in the first embodiment. The width in the radial direction is larger than the spot diameter of the irradiation region by the incident light L1. The second fluorescent material layer 35 is formed on the first fluorescent material layer 34 at a position between the outer periphery and the inner periphery of the first fluorescent material layer 34. The position where the second fluorescent material layer 35 is to be provided is a position corresponding to the irradiation region 40 to be irradiated with the incident light L1 incident on the incident surface 2 when the fluorescent wheel is rotated, and the width in the radial direction is the same as the spot diameter. Here, the "same" means not only the case of perfect coincidence, but also the case of 10% larger or 10% smaller than the spot diameter.

Also, in the case of the fifth to seventh embodiments, the first fluorescent material layer 34 is always formed at the boundary between the segments. Since the first fluorescent material layer 34 is formed in an annular shape without any discontinuity, it is possible to prevent a gap from being generated at the boundary between the first segment region 21 and the second segment region 22 due to thermal expansion and contraction.

### Ninth embodiment:

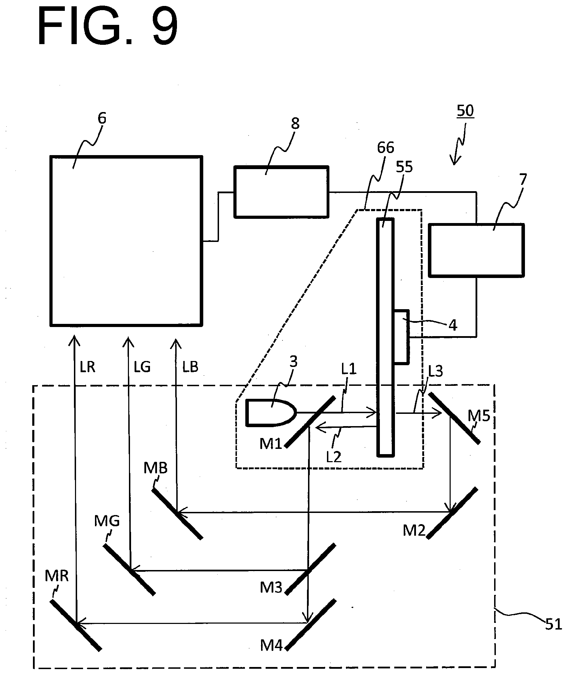

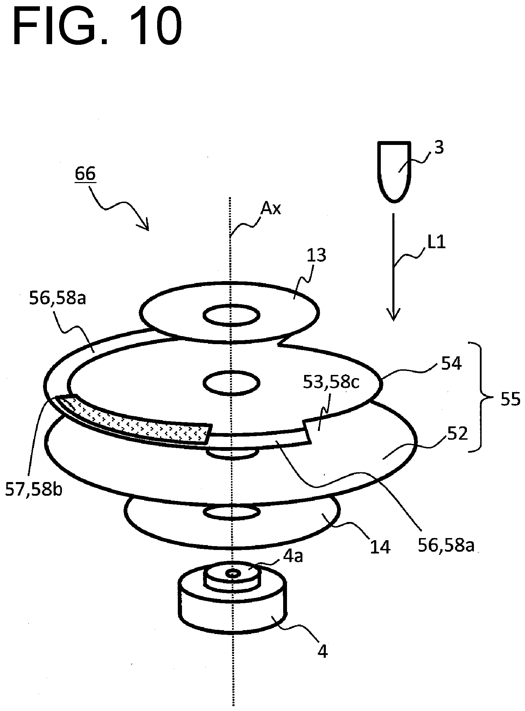

A ninth embodiment will be described with reference to FIGS. 9 and 10. FIG. 9 is a diagram illustrating a projection apparatus 50 according to the ninth embodiment. FIG. 10 is an exploded schematic perspective view illustrating the light source device 66 used in FIG. 9. In the first embodiment, the first fluorescent material layer 34 in an annular shape is formed on the disk-shaped support substrate 10 as a fluorescent wheel. The present embodiment is different from the first embodiment in that a double-structured fluorescent wheel 55 is formed of a support substrate 54 in which a notch portion 53 (corresponding to the "opening" defined in the claim) is provided in a part of the outer periphery of the disk-shaped support substrate 54 and a diffusion plate 52 provided on the side opposite to the incident surface of the support substrate 54, that is, on the side closer to the motor 4.

The diffusion plate 52 is formed of a transparent material such as glass, ceramics, or resin, and has at least a region corresponding to the notch 53 formed as a diffusion region. The outer diameter of the diffuser plate 52 is substantially the same as that of the support substrate 54, and a hole to which the rotating portion 4a of the motor 4 fits is provided to the diffusion plate 52 in the central portion. The diffusion region may be formed as a diffusion portion in which irregularities are formed on the surface by roughening treatment, or formed of a diffusion material contained in a transmissive material. Alternatively, the diffusion plate 52 may be formed by a metal substrate provided with glass or the like which has transmission and diffusion properties and is fitted into at least a portion thereof corresponding to the diffusion region. The diffusion plate 52 is disposed between the support substrate 54 and the lower receiving plate 14.

The support substrate 54 is formed of a metal material in the same manner as that in the first embodiment, and provided with a shaft mounting hole formed in the central portion thereof. As illustrated in FIG. 9, a notch 53 is formed in a part of the outer periphery thereof. The notch 53 is formed at such a position that the notch 53 passes through the irradiation region 40 where the incident light L1 is irradiated when the support substrate 54 is rotated about the rotation axis Ax. Here, the support substrate 54 and the diffusion plate 52 are integrated while being concentric. The support substrate 54 is disposed between the diffusion plate 52 and the upper receiving plate 13.

The outer peripheral region of the support substrate 54 where the notch 53 is not provided is provided with a fluorescent material layer formed on the incident surface side. In the example illustrated in FIG. 9, the first fluorescent material layer 56 is formed in a letter-C shape to cover all the positions where the first fluorescent material layer 56 passes through the irradiation region 40 where the incident light L1 is irradiated when the support substrate 54 is rotated about the rotation axis Ax. Of course, the first fluorescent material layer 56 is not (cannot be) provided in the region defined as the notch 53 in the circumference although passing through the irradiation region 40. A second fluorescent material layer 57 is formed on a part of the surface of the first fluorescent material layer 56 formed in a letter-C shape. As in the fifth embodiment, the second fluorescent material layer 57 is formed by coating the material for the second fluorescent material layer 57 on the first fluorescent material layer 56 only in a partial region of the circumference passing through the irradiation region 40.

Thus, the double-structured fluorescent wheel 55 is provided with, in the circumference of the fluorescent wheel 55 passing through the irradiation region 40 where the incident light L1 is irradiated when rotating around the rotation axis Ax, the region where the diffuser plate 52 is exposed to the surface, the region where the first fluorescent material layer 56 is exposed to the surface and the region where the second fluorescent material layer 57 is exposed to the surface to form three types of segment regions 58.

A first segment region 58a is a region in which the first fluorescent material layer 56 is exposed to the surface. In FIG. 10, two regions between the notch 53 and the second fluorescent material layer 57 correspond to the first segment region 58a. A second segment region 58b is a region in which the second fluorescent material layer 57 is formed on the first fluorescent material layer 56. In FIG. 10, a region provided between two first segment regions 58a corresponds to the second segment region 58b. A third segment region 58c is a region corresponding to the notch 53 where the diffusion plate 52 is exposed to the surface. The first segment region 58a and the second segment region 58b reflect the incident light L1, and the third segment region 58c transmits the incident light L1.

In the projection apparatus 50 of FIG. 9, a semiconductor light source 3 adopted also in the first embodiment is adopted for the light source device 66. The incident light L1 that the fluorescent wheel 55 is irradiated with in the light source device 66 partly becomes reflected light L2 and partly becomes transmitted light L3. The reflected light L2 includes fluorescence emitted from the first fluorescent material layer 56 and fluorescence emitted from the second fluorescent material layer 57. The transmitted light L3 includes a light component emitted from the semiconductor light source 3. Suppose a case where a blue laser is used as the semiconductor light source 3. In this case, when the first fluorescent material layer 56 and the second fluorescent material layer 57 include a fluorescent material which is excited by a blue laser beam and emits fluorescence with a red component and a green component, the reflected light L2 includes a red component (R) and a green component (G) and the transmitted light L3 includes a blue component (B). The transmitted light L3 is diffused when passing through the diffusion plate 52 and is reflected by the mirror M5 after being condensed by a condenser lens (not illustrated). The light reflected by the mirror M5 travels toward the projecting optical unit 6 after being reflected by the mirror M2 and MB. The reflected light L2 reflected by the fluorescent wheel 55 is condensed by a condensing lens (not illustrated). Then, the light components of the reflected light L2 are reflected by the mirrors M3 and M4, and reflected by the mirrors MG and MR, respectively, and then travel toward the projection optical unit 6. The mirror M3 is a dichroic mirror, and reflects the light LG in the green wavelength range but transmits the light in the red wavelength range.

Also, in the ninth embodiment, the first fluorescent material layer 56 is continuously formed at the boundary between the first segment region 58a and the second segment region 58b. Since the first fluorescent material layer 56 is formed as a continuous body without any discontinuity at this boundary, it is possible to prevent a gap from being generated at the boundary between the first segment region 58a and the second segment region 58b due to thermal expansion and contraction. The first fluorescent material layer 56 of the first segment region 58a is also formed on the end face closer to the notch 53 that is a boundary portion between it and the notch 53. Therefore, a gap can also be prevented from being generated at the boundary between the first segment region 58a and the third segment region 58c.

### Modified example:

In the embodiments described above, other optical elements may be interposed between the light source device 1 and the projection lens of the projection optical system 6. Examples thereof may include lenses, mirrors, prisms and filters.

Although an example of using an MD element as an optical spatial modulator included in the projection optical system 6 has been illustrated, the present invention is not limited thereto. Other examples of the optical spatial modulator may include a monochrome liquid crystal panel of the transmission type.

The present invention can be applied to a projection apparatus such as a projector for projecting images, video images, or the like. Furthermore, the present invention can be applied to a light source device of a projection apparatus using a fluorescent wheel.

## Claims

1. A light source device (1, 66) comprising a semiconductor light source (3) capable of emitting light in a blue wavelength range and a fluorescent wheel (2, 60, 61, 63, 64, 65) having an incident surface (2a) on which light emitted from the semiconductor light source (3) is incident,
wherein the fluorescent wheel (2, 60, 61, 63, 64, 65) includes a support substrate (10) rotatable about a rotation axis (Ax) and having the incident surface (2a) provided with a plurality of segment regions (20) containing a fluorescent material; and
wherein the support substrate (10) is formed of a metal material having a reflective flat surface (12) on a side of the incident surface (2a);
**characterized in that**
the plurality of segment regions (20) includes at least a first segment region (21) consisting only of a first fluorescent material layer (34) and a second segment region (22) that is a laminated film of a second fluorescent material layer (35) on the first fluorescent material layer (34), the first segment region (21) and the second segment region (22) being alternately provided in the circumferential direction about the rotation axis (Ax);
the first fluorescent material layer (34) is configured such that a first fluorescent material that receives the light emitted from the semiconductor light source (3) as excitation light and emits yellow light is dispersed in a resin binder;
the second fluorescent material layer (35) is configured such that a second fluorescent material that receives the light emitted from the semiconductor light source (3) as excitation light and emits red light is dispersed in a resin binder;
the second fluorescent material is a fluorescent material that emits light also by being excited by the yellow light emitted from the first fluorescent material and has a higher emission quantum yield when the yellow light emitted from the first fluorescent material is used as the excitation light than when the light emitted from the semiconductor light source (3) is used as the excitation light; and
the light emitted from the semiconductor light source (3) is incident on the incident surface of the fluorescent wheel (2, 60, 61, 63, 64, 65) in an irradiation region of which width in a radial direction around the rotation axis (Ax) is smaller than a width (W1) of the first fluorescent material layer (34).

2. The light source device according to claim 1, **characterized in that** the second segment region (22) is radially formed in plural numbers around the rotation axis (Ax) and at equal intervals in the circumferential direction around the rotation axis (Ax).

3. The light source device according to any one of claims 1 or 2, **characterized in that**
the support substrate (10) includes an aluminum substrate (10) and a reflective coating layer (33) including a laminated film containing a silicon oxide layer (33a), a silver layer (33b) and a titanium oxide layer (33c) sequentially formed on the aluminum substrate (10) in order on the incident surface thereof.

4. The light source device (66) according to any one of claims 1 or 2, **characterized in that**
the fluorescent wheel (55) includes an opening (53) formed on a circumference around the rotation axis (Ax) where the first fluorescent material layer (56 ) is provided.

5. The light source device (1, 66) according to any one of claims 1 to 4, **characterized in that** the second fluorescent material layer (35) has a thickness which is the same as or thinner than that of the first fluorescent material layer (34).

6. The light source device (1, 66) according to claim 5, **characterized in that** the second fluorescent material is a fluorescent material having (Sr,Ca)AlSiN:Eu as a basic composition.

7. A projection apparatus (9, 50) comprising:
the light source device (1, 66) according to any one of claims 1 to 6;
a color component separating unit (5) configured to receive light emitted from the light source device (1) and separate the light into lights with three primary color components of R, G and B;
a projection optical system (6) configured to use and project the lights from the color component separating unit (5);
a light source device controlling unit (7) configured to control the light source device (1, 66); and
a projection apparatus control unit (8) configured to control the projection optical system (6) to create a predetermined projection image with the lights from the color component separating unit (5).

## Patentansprüche

1. Lichtquellenvorrichtung (1, 66), die eine Halbleiterlichtquelle (3) aufweist, die fähig ist, Licht in einem blauen Wellenlängenbereich zu emittieren, und ein fluoreszierendes Rad (2, 60, 61, 63, 64, 65) mit einer Einfallsfläche (2a), auf der Licht, welches von der Halbleiterlichtquelle (3) emittiert wird, auftrifft,
wobei das fluoreszierende Rad (2, 60, 61, 63, 64, 65) ein Tragsubstrat (10) aufweist, welches um eine Rotationsachse (Ax) drehbar ist, und wobei die Einfallsfläche (2a) mit einer Vielzahl von Segmentregionen (20) versehen ist, die ein fluoreszierendes Material enthalten; und
wobei das Tragsubstrat (10) aus einem Metallmaterial mit einer reflektierenden flachen Oberfläche (12) auf einer Seite der Einfallsfläche (2a) geformt ist;
**dadurch gekennzeichnet, dass**
die Vielzahl von Segmentregionen (20) zumindest eine erste Segmentregion (21), die nur aus einer ersten Schicht (34) eines fluoreszierenden Materials besteht, und eine zweite Segmentregion (22) aufweist, die ein laminierter Film einer zweiten Schicht (35) eines fluoreszierenden Materials auf der ersten Schicht (34) eines fluoreszierenden Materials ist, wobei die erste Segmentregion (21) und die zweite Segmentregion (22) abwechselnd in der Umfangsrichtung um die Rotationsachse (Ax) vorgesehen sind;
die erste Schicht (34) eines fluoreszierenden Materials so konfiguriert ist, dass ein erstes fluoreszierendes Material, welches das Licht, das von der Halbleiterlichtquelle (3) emittiert wurde, als Erregungslicht aufnimmt und gelbes Licht emittiert, in einem Harz- bzw. Kunststoffbinder dispergiert ist; die zweite Schicht (35) eines fluoreszierenden Materials so konfiguriert ist, dass ein zweites fluoreszierendes Material, welches das Licht, das von der Halbleiterlichtquelle (3) emittiert wird, als Erregungslicht aufnimmt und rotes Licht emittiert, in einem Harz- bzw. Kunststoffbinder dispergiert ist;
das zweite fluoreszierende Material ein fluoreszierendes Material ist, welches Licht auch dadurch emittiert, dass es durch das gelbe Licht erregt wird, welches von dem ersten fluoreszierenden Material emittiert wird und eine höhere Emissionsquantenausbeute hat, wenn das gelbe Licht, welches von dem ersten fluoreszierenden Material emittiert wird, als das Erregungslicht verwendet wird, als wenn das Licht, welches von der Halbleiterlichtquelle (3) emittiert wird, als das Erregungslicht verwendet wird; und das Licht, welches von der Halbleiterlichtquelle (3) emittiert wird, auf die Einfallsfläche des fluoreszierenden Rades (2, 60, 61, 63, 64, 65) in einer Bestrahlungsregion auftrifft, deren Breite in einer radialen Richtung um die Rotationsachse (Ax) kleiner ist als eine Breite (W1) der ersten Schicht (34) eines fluoreszierenden Materials.

2. Lichtquellenvorrichtung nach Anspruch 1, **dadurch gekennzeichnet, dass** die zweite Segmentregion (22) radial in einer Vielzahl um die Rotationsachse (Ax) und in gleichen Intervallen in der Umfangsrichtung um die Rotationsachse (Ax) geformt ist.

3. Lichtquellenvorrichtung nach einem der Ansprüche 1 oder 2, **dadurch gekennzeichnet, dass**
das Tragsubstrat (10) ein Aluminiumsubstrat (10) und eine reflektierende Beschichtungsschicht (33) aufweist, welche einen laminierten Film aufweist, der eine Siliziumoxidschicht (33a), eine Silberschicht (33b) und eine Titanoxidschicht (33c) aufweist, die sequentiell auf dem Aluminiumsubstrat (10) in der Reihenfolge auf der Einfallsfläche davon geformt sind.

4. Lichtquellenvorrichtung (66) nach einem der Ansprüche 1 oder 2, **dadurch gekennzeichnet, dass**
das fluoreszierende Rad (55) eine Öffnung (53) aufweist, die an einem Umfang um die Rotationsachse (Ax) geformt ist, wenn die erste Schicht (56) eines fluoreszierenden Materials vorgesehen ist.

5. Lichtquellenvorrichtung (1, 66) nach einem der Ansprüche 1 bis 4, **dadurch gekennzeichnet, dass** die zweite Schicht (35) eines fluoreszierenden Materials eine Dicke hat, welche die gleiche wie oder dünner als jene der ersten Schicht (34) eines fluoreszierenden Materials ist.

6. Lichtquellenvorrichtung (1, 66) nach Anspruch 5, **dadurch gekennzeichnet, dass** das zweite fluoreszierende Material ein fluoreszierendes Material mit (Sr,Ca)AlSiN:Eu als Basiszusammensetzung ist.

7. Projektionsvorrichtung (9, 50), die Folgendes aufweist:
die Lichtquellenvorrichtung (1, 66) nach einem der Ansprüche 1 bis 6;
eine Farbkomponententrenneinheit (5), die konfiguriert ist, um Licht, welches von der Lichtquellenvorrichtung (1) emittiert wurde, aufzunehmen, und das Licht in Lichter mit drei Primärfarbkomponenten R, G und B zu trennen;
ein Projektionsoptiksystem (6), das konfiguriert ist, um die Lichter von der Farbkomponententrenneinheit (5) zu verwenden und zu projizieren;
eine Lichtquellenvorrichtungssteuereinheit (7), die konfiguriert ist, um die Lichtquellenvorrichtung (1, 66) zu steuern; und
eine Projektionsvorrichtungssteuereinheit (8), die konfiguriert ist, um das Projektionsoptiksystem (6) zu steuern, um ein vorbestimmtes Projektionsbild mit den Lichtern von der Farbkomponententrenneinheit (5) zu erzeugen.

## Revendications

1. Dispositif de source de lumière (1, 66) comprenant une source de lumière semiconductrice (3) pouvant émettre de la lumière dans une plage de longueurs d'onde bleues et une roue fluorescente (2, 60, 61, 63, 64, 65) ayant une surface incidente (2a) sur laquelle une lumière émise par la source de lumière semiconductrice (3) est incidente,
dans lequel la roue fluorescente (2, 60, 61, 63, 64, 65) comporte un substrat support (10) pouvant tourner autour d'un axe de rotation (Ax) et ayant la surface incidente (2a) pourvue d'une pluralité de régions de segment (20), contenant un matériau fluorescent ; et
dans lequel le substrat de support (10) est constitué d'un matériau métallique ayant une surface plane réfléchissante (12) sur un côté de la surface incidente (2a) ;
**caractérisé en ce que**
la pluralité de régions de segment (20) comporte au moins une première région de segment (21) constitué uniquement d'une première couche de matériau fluorescent (34) et une deuxième région de segment (22) qui est un film stratifié d'une deuxième couche de matériau fluorescent (35) sur la première couche de matériau fluorescent (34), la première région de segment (21) et la deuxième région de segment (22) étant alternées dans la direction circonférentielle autour de l'axe de rotation (Ax),
la première couche de matériau fluorescent (34) est configurée de sorte qu'un premier matériau fluorescent qui reçoit la lumière émise par la source de lumière semiconductrice (3) en tant que lumière d'excitation et qui émet une lumière jaune est dispersé dans un liant en résine ;
la deuxième couche de matériau fluorescent (35) est configurée de sorte qu'un deuxième matériau fluorescent qui reçoit la lumière émise par la source de lumière semiconductrice (3) en tant que lumière d'excitation et qui émet une lumière rouge est dispersé dans un liant en résine ;
le deuxième matériau fluorescent est un matériau fluorescent qui émet de la lumière également en étant excité par la lumière jaune émise par le premier matériau fluorescent et qui a un rendement de quantum d'émission plus élevé lorsque la lumière jaune émise par le premier matériau fluorescent est utilisée en tant que lumière d'excitation que lorsque la lumière jaune émise par la source de lumière semiconductrice (3) est utilisée en tant que lumière d'excitation ; et
la lumière émise par la source de lumière semiconductrice (3) est incidente sur la surface incidente de la roue fluorescente (2, 60, 61, 63, 64, 65) dans une région d'irradiation dont la largeur dans une direction radiale autour de l'axe de rotation (Ax) est plus petite qu'une largeur (W1) de la première couche de matériau fluorescent (34).

2. Dispositif de source de lumière selon la revendication 1, **caractérisé en ce que** la deuxième région de segment (22) est formée radialement en plusieurs nombres autour de l'axe de rotation (Ax) et à des intervalles égaux dans la direction circonférentielle autour de l'axe de rotation (Ax).

3. Dispositif de source de lumière selon l'une quelconque des revendications 1 ou 2, **caractérisé en ce que**
le substrat support (10) comporte un substrat en aluminium (10) et une couche de revêtement réfléchissante (33) comportant un film stratifié contenant une couche d'oxyde de silicium (33a), une couche d'argent (33b) et une couche d'oxyde de titane (33c) formées séquentiellement sur le substrat d'aluminium (10) dans cet ordre sur sa surface incidente.

4. Dispositif de source de lumière (66) selon l'une quelconque des revendications 1 ou 2, **caractérisé en ce que**
la roue fluorescente (55) comporte une ouverture (53) formée sur une circonférence autour de l'axe de rotation (Ax) où la première couche de matériau fluorescent (56) est prévue.

5. Dispositif de source de lumière (1, 66) selon l'une quelconque des revendications 1 à 4, **caractérisé en ce que** la deuxième couche de matériau fluorescent (35) a une épaisseur qui est égale ou inférieure à celle de la première couche de matériau fluorescent (34).

6. Dispositif de source de lumière (1, 66) selon la revendication 5, **caractérisé en ce que** le deuxième matériau fluorescent est un matériau fluorescent ayant (Sr,Ca)AlSiN :Eu en tant que composition de base.

7. Appareil de projection (9, 50) comprenant :
le dispositif de source de lumière (1, 66) selon l'une quelconque des revendications 1 à 6 ;
une unité de séparation de composantes de couleur (5) configurée pour recevoir une lumière émise par le dispositif de source de lumière (1) et pour séparer la lumière en lumières avec trois composantes de couleurs primaires R, V et B ;
un système optique de projection (6) configuré pour utiliser et projeter les lumières provenant de l'unité de séparation de composantes de couleur (5) ;
une unité de commande du dispositif de source de lumière (7) configurée pour commander le dispositif de source de lumière (1, 66) ; et
une unité de commande de l'appareil de projection (8) configurée pour commander le système optique de projection (6) pour créer une image de projection prédéterminée avec les lumières provenant de l'unité de séparation de composantes de couleur (5).
